# EUROPEAN PATENT SPECIFICATION

(11) **EP 3 727 850 B1**
(45) Date of publication and mention of the grant of the patent: **15.05.2024**
(21) Application number: 18830149.3
(22) Date of filing: 10.12.2018
(51) Int. Cl.: B32B 25/14, B32B 1/08, C08L 9/02, C08L 79/02

(54) **HYDRAULIC HOSE**
HYDRAULIKSCHLAUCH
TUYAU HYDRAULIQUE

(30) Priority: 20.12.2017 IN 201711045916; 15.03.2018 GB 201804151
(43) Date of publication of application: 28.10.2020
(73) Proprietor: Danfoss A/S, 6430 Nordborg (DK)
(72) Inventor: BENDER, Pierre, 76473 Iffezheim (DE); ATTILA, Rakos, 3508 Miskolc (HU); SINGH, Dipak, Pune 411006 (IN); KARAYAZI, Volkan, 59950 Cerkezkoy (TR)
(74) Representative: Keil & Schaafhausen Patentanwälte PartGmbB
(86) International application number: PCT/EP2018/084168
(87) International publication number: WO 2019/121104

(56) References cited:
- EP-A1- 2 891 694
- JP-A- 2009 155 441
- US-A1- 2017 029 603

## Description

The invention relates to a hydraulic hose.

Conventional hydraulic hoses, which are used for transporting hydraulic liquids or gas (eg. steam), have a limited lifetime because of hose failures due to e.g. pressure, pressure changes, temperature, aging, movement, abrasion, fluid aggressiveness etc. The hose failures mostly start with micro-sized cracks and surface defects of the elastomeric material used for the innermost layer tube, which is in contact with the hydraulic liquid or gas.

It is an object of at least one embodiment of the present invention to provide a hydraulic hose which is more resistant to initial failure and to provide a method for producing a hydraulic hose. Another object is to provide a use of a self-sealing material composition for a hydraulic hose.

The objects are achieved by means of a hydraulic hose comprising the features of claim 1, a method for producing a hydraulic hose comprising the features of claim 13 and a use of a self-sealing material composition for an innermost layer tube of a hydraulic hose according to claim 14.

Advantageous embodiments and developments of the present invention are specified in the respective dependent claims.

A hydraulic hose is specified. Here and in the following, a hydraulic hose means that the hose is capable of transporting hydraulic liquids, especially trough at least one channel, for example oils or fuels, especially under high pressure.

The hydraulic hose comprises an innermost layer tube encircling at least one channel. The innermost layer tube comprises a self-sealing material composition comprising an elastomeric material and a polyalkyleneimine, wherein the elastomeric material is a butadiene copolymer or a polychloroprene.

The material composition for the innermost layer tube has a self-sealing ability. Due to the self-sealing ability of the material composition, initial cracks inside the hose, especially of the innermost layer tube, can be healed. This prevents early life failures of the hydraulic hose and therefore increases the lifetime and the quality of the hose. Advantageously the hydraulic hose does not have to be replaced, or at least does not have to be immediately replaced, due to initial cracks. At least the mean time between maintenance and replacement of the hose is reduced. Advantageously the cracks of the innermost layer tube are healed automatically, in other words the self-sealing takes place without any external force or intervention. This is due to the nucleophilic and quite reactive amine groups present in the polyalkyleneimine, which forms chemical bonds with the elastomeric material in the case of a crack as a results of tube degradation. In addition the production of the hydraulic hose is easier as small defects don't have any effect as they are healed due to the self-sealing ability of the material composition. In high temperature applications the process of healing initial cracks of the innermost layer tube is advantageously fastened.

According to one embodiment the self-sealing material composition comprises 0.5 to 50 % per weight of the polyalkyleneimine in relation to the overall weight of the elastomeric material and the polyalkyleneimine.

According to one embodiment, the polyalkyleneimine is selected from polyethyleneimine, polypropyleneimine, polybutyleneimine, polypentyleneimine and combinations thereof.

According to one embodiment, the polyalkyleneimine is linear or branched. Preferably, the polyalkyleneimine is branched. By using a branched polyalkyleneimine more reactive amine sites are present, so that the probability of initial cracks being healed is increased. In addition by the use of branched polyalkyleneimine the tensile strength is maintained at the repaired area of the innermost layer tube.

According to one embodiment, the polyalkyleneimine is a linear or branched polyethyleneimine.

According to one embodiment, the polyalkyleneimine is a branched polyethyleneimine of the following formula: 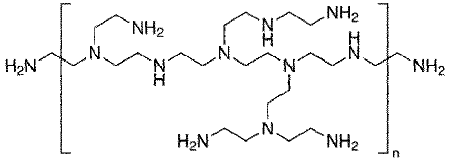 with n ≠ 0.

According to one embodiment the polyethyleneimine can be functionalized with an urea group.

According to one embodiment, the branched polyethyleneimine has a molar mass distribution MW between 500 g/mol and 50000 g/mol, preferably between 500 g/mol and 25000 g/mol, more preferably between 800 g/mol and 5000 g/mol. For example, the branched polyethyleneimine has a molar mass distribution MW of 800 g/mol or 2000 g/mol. The higher the molar mass distribution, the better the self-sealing ability.

According to one embodiment the elastomeric material comprises C=O groups Then for example the following reaction takes place between the elastomeric material and the polyalkyleneimine, in which an amide group is formed:

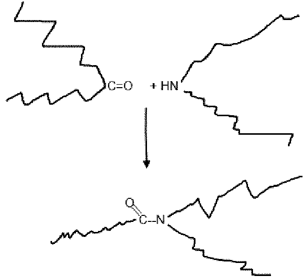

The elastomeric material is a butadiene polymer or a butadiene copolymer. By using those elastomeric materials for the innermost layer tube, the flexibility of the hose can be guaranteed.

According to one embodiment, the elastomeric material is a nitrile butadiene rubber. Nitrile butadiene rubbers are unsaturated copolymers of 2-propenenitrile and butadiene monomers, especially 1,2-butadiene and/or 1,3-butadiene This type of elastomeric material is very resistant to fuel, oil and other chemicals and can withstand very high internal working pressures which can occur in hydraulic hoses. In the case of an initial crack chemical bonds, especially covalent bonds, are formed between the polyalkyleneimine and the nitrile butadiene rubber such that the initial cracks are healed.

Advantageously this bond formation takes place without any external intervention and this process is even fastened at high temperature applications of the hydraulic hose.

According to one embodiment, the elastomeric material is a acrylonitrile butadiene rubber of the following formula: 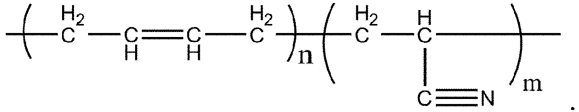 with m ≠ 0 and n ≠ 0.

According to one embodiment the elastomeric material is a modified acrylonitrile butadiene rubber of one of the following formula: 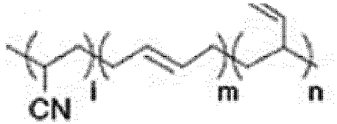 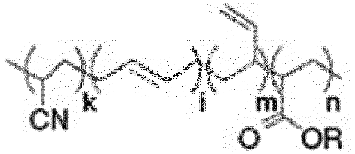 with m ≠ 0, n ≠ 0, i ≠ 0, k + 0.

R may be, for example, a metal ion like Zn, H or an alkyl group, like a methyl or ethyl group for example.

According to one embodiment, the elastomeric material is a is a unsaturated elastomeric material. For example the elastomeric material according to this embodiment can be a polychloroprene or a modified polychloroprene.

According to one embodiment the elastomeric material, especially the nitrile butadiene rubber, the modified nitrile butadiene rubber, the polychloroprene or the modified polychloroprene is vulcanised.

According to one embodiment the innermost layer tube has a layer thickness of between 0.5 mm and 4.0 mm.

According to one embodiment, the hydraulic hose further comprises at least one intermediate layer and/or an outer layer covering the innermost layer tube.

According to one embodiment, the at least one intermediate layer is a metal or textile braiding covering or spiraling covering the innermost layer tube. Preferably the metal or textile braiding or spiraling covers the innermost layer tube completely.

According to one embodiment, the outer layer comprises a self-sealing material composition comprising an elastomeric material and a polyalkyleneimine and covers the at least one intermediate layer. Preferably the outer layer covers the intermediate layer completely. According to this embodiment also in the outer layer, which is preferably the outermost layer of the hydraulic hose, initial cracks which may occur from light abrasion or any other environmental effects can be healed due to the self-sealing ability of the self-sealing material composition used.

All features concerning the self-sealing material mentioned for the innermost layer tube can also be features of the self-sealing material of the outer layer.

According to one embodiment the innermost layer tube and the outer layer, preferably the outermost layer, comprise the same self-sealing material composition.

The specified embodiments of the hydraulic hose can be produced in accordance with the method mentioned below. All features of the hydraulic hose that are mentioned under the method can also be features of the above-explained exemplary embodiments of the hydraulic hose and vice versa.

A method for producing a hydraulic hose is specified.

The hydraulic hose comprises an innermost layer tube encircling at least one channel wherein the innermost layer tube comprises a self-sealing material composition comprising an elastomeric material and a polyalkyleneimine, wherein the elastomeric material is a butadiene copolymer or a polychloroprene.

The method comprises the following steps, preferably in the given sequence:
A) mixing an elastomeric material and a polyalkyleneimine,
B) extruding the mixture of step A),
C) curing the extruded mixture of step B) to form an innermost layer tube encircling at least one channel and which comprises an elastomeric material and a polyalkyleneimine, wherein the elastomeric material is a butadiene copolymer or a polychloroprene.

Advantageously the polyalkyleneimine is stable to temperatures up to 250 °C such that it can be mixed to the elastomeric material and does not degrade in the extruding step and/or in an optional vulcanization step. Polyalkyleneimines, especially polyalkyleneimines with different molar mass distributions, are commercially available.

The method of producing the elastomeric material is known to a person skilled in the art. For example nitrile butadiene rubber can be produced by a co-polymerisation of 2-propenenitrile and butadiene monomers e.g. 1,2-butadiene and 1,3-butadiene.

Further, the use of a self-sealing material composition comprising an elastomeric material and a polyalkyleneimine for an innermost layer tube of a hydraulic hose, wherein the elastomeric material is a butadiene copolymer or a polychloroprene, is specified.

All features of the hydraulic hose that are mentioned above and all features mentioned above for the method of producing a hydraulic hose can also be features of the use of the self-sealing material composition and vice versa.

In the following, the present invention will be demonstrated based on a working example and a comparative example.

For the working example a tube made of a mixture of a standard elastomeric material is mixed with a polyalkyleneimine, and as a comparative example a standard tube consisting of the same standard elastomeric material is used.

Comparative physical loss tests after crack generation was done with the working and the comparative example. The results are shown in the table below:

| | comparative example | working example |
|---|---|---|
| Original Tensile Strength [MPa] | 178 | 159 |
| Original Elongation Break [%] | 132 | 164 |
| Tensile Strength after cut and 24 h healing period [MPa] | 153 | 164 |
| Elongation Break after cut and 24 h healing period [%] | 111 | 166 |
| Drop in Tensile Strength [%] | -14 | 3 |
| Drop in Elongation Break [%] | -16 | 1 |

What can be seen from these tests, is that the working example shows a reversion of the tensile strength and the elongation break 24 hours after the crack generation (cut), whereas the comparative example shows an immense drop in tensile strength and elongation break. This shows the excellent self-sealing ability of the material composition for an innermost layer tube of a hydraulic hose. By using the inventive self-sealing material composition for an innermost layer tube of a hydraulic hose, early life failures of the hydraulic hose due to cracks or pin-holes in the production process can be reduced.

Further advantageous embodiments and developments of the invention will be apparent from the exemplary embodiments described below in association with the figures.

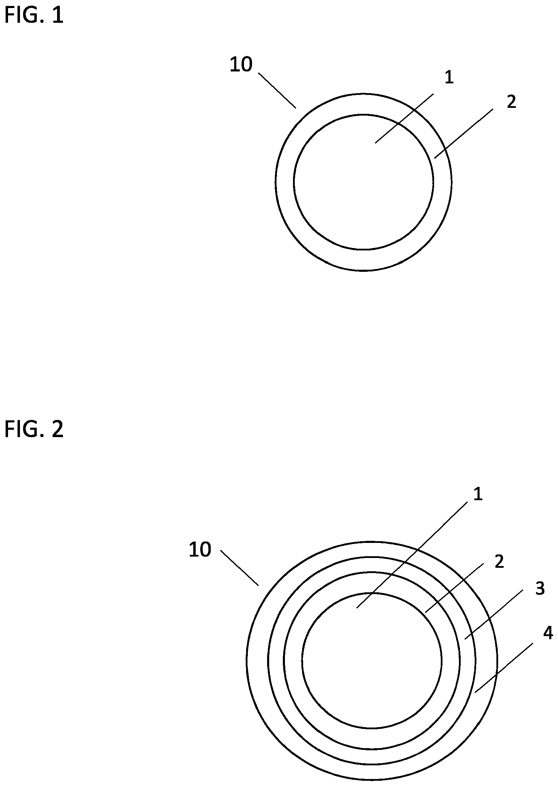

Figures 1 and 2 show schematic cross-sectional views of different embodiments of hydraulic hoses.

In the figures, identical or identically acting constituent parts are provided in each case with the same reference signs. The illustrated elements and their size relationships to each other should not be regarded as true to scale. Rather, individual elements, in particular layer thicknesses, may be illustrated with an exaggerated size in order to afford a better understanding.

The hydraulic hose 10 in accordance with Figure 1 exhibits a channel 1 in which hydraulic fluids can be transported. An innermost layer tube 2 encircles the channel 1. The innermost layer tube 2 comprises a self-sealing material composition comprising a nitrile butadiene rubber and a branched polyethyleneimine with a molar mass distribution of, for example, 800 g/mol or 2000 g/mol. Due to the self-sealing ability of the material composition, initial cracks due to for example pressure, pressure drops, temperature, aging, movement, abrasion and fluid aggressiveness of the innermost layer tube can be healed. This prevents early life failures of the hydraulic hose and therefore increases the lifetime and the quality of the hose.

In comparison to the hydraulic hose of Figure 1, the hydraulic hose 10 of Figure 2 further comprises an intermediate layer 3, for example a metal braiding and an outer layer 4 comprising a self-sealing material composition which can comprise the same elastomeric material and the same polyalkyleneimine as the innermost layer tube 2. Here in the outer layer 4, which is preferably the outermost layer of the hydraulic hose 10, initial cracks which may occur from light abrasion or any other environmental effects can also be healed due to the self-sealing ability of the material composition.

The invention is not restricted by the description on the basis of the exemplary embodiments. Rather, the invention encompasses any novel feature and also any combination of features, which in particular includes any combination of features in the patent claims even if this feature or this combination itself is not explicitly specified in the exemplary embodiments.

## Claims

1. A hydraulic hose (10) comprising an innermost layer tube (2) encircling at least one channel (1), wherein the innermost layer tube (2) comprises a self-sealing material composition comprising an elastomeric material and a polyalkyleneimine, and wherein the elastomeric material is a butadiene copolymer or a polychloroprene.

2. The hydraulic hose (10) according to claim 1, wherein the polyalkyleneimine is selected from polyethyleneimine, polypropyleneimine, polybutyleneimine and polypentyleneimine.

3. The hydraulic hose (10) according to one of the preceding claims, wherein the polyalkyleneimine is linear or branched.

4. The hydraulic hose (10) according to one of the preceding claims, wherein the polyalkyleneimine is a polyethyleneimine.

5. The hydraulic hose (10) according to claim 4, wherein the polyalkyleneimine is a branched polyethyleneimine of the following formula

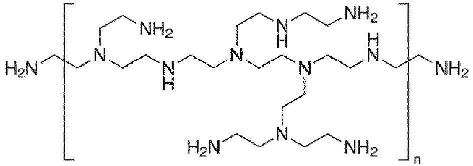

6. The hydraulic hose (10) according to claim 4 or 5, wherein the branched polyethyleneimine has a molar mass distribution Mw between 500 g/mol and 50000 g/mol.

7. The hydraulic hose (10) according to one of the preceding claims, wherein the elastomeric material is a acrylonitrile butadiene rubber.

8. The hydraulic hose (10) according to one of the preceding claims, wherein the elastomeric material is a acrylonitrile butadiene rubber of the following formula

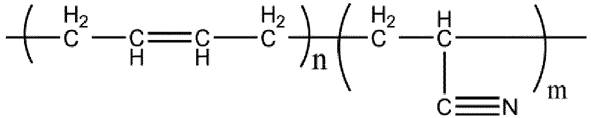

9. The hydraulic hose (10) according to one of the preceding claims 1 to 7, wherein the elastomeric material is a modified acrylonitrile butadiene rubber of one of the following formula 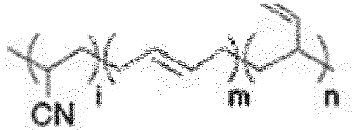 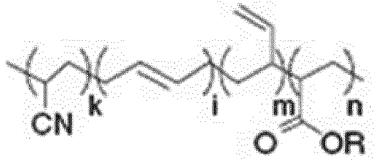 with R being a metal ion, H or an alkyl group.

10. The hydraulic hose (10) according to one of the preceding claims, further comprising at least one intermediate layer (3) and/or an outer layer (4) covering the innermost layer tube (2).

11. The hydraulic hose (10) according to claim 10, wherein the at least one intermediate layer (3) is a metal braiding covering the innermost layer tube (2) and the outer layer (4) comprises a self-sealing material composition comprising an elastomeric material and a polyalkyleneimine and covers the at least one intermediate layer (3).

12. A method for producing a hydraulic hose (10) according to claims 1 to 11, comprising the steps
A) mixing an elastomeric material and a polyalkyleneimine,
B) extruding the mixture of step A),
C) curing the extruded mixture of step B) to form an innermost layer tube (2) encircling at least one channel (1) and which comprises an elastomeric material and a polyalkyleneimine, wherein the elastomeric material is a butadiene copolymer or a polychloroprene.

13. Use of a self-sealing material composition comprising an elastomeric material and a polyalkyleneimine for an innermost layer tube (2) of a hydraulic hose (10), wherein the elastomeric material is a butadiene copolymer or a polychloroprene.

## Patentansprüche

1. Hydraulikschlauch (10), umfassend eine innerste Schlauchlage (2), die wenigstens einen Kanal (1) umgibt, wobei die innerste Schlauchlage (2) eine selbstdichtende Materialzusammensetzung umfasst, die ein Elastomermaterial und ein Polyalkylenimin umfasst, und wobei das Elastomermaterial ein Butadien-Copolymer oder ein Polychloropren ist.

2. Hydraulikschlauch (10) gemäß Anspruch 1, wobei das Polyalkylenimin ausgewählt ist aus Polyethylenimin, Polypropylenimin, Polybutylenimin und Polypentylenimin.

3. Hydraulikschlauch (10) gemäß einem der vorstehenden Ansprüche, wobei das Polyalkylenimin linear oder verzweigt ist.

4. Hydraulikschlauch (10) gemäß einem der vorstehenden Ansprüche, wobei das Polyalkylenimin ein Polyethylenimin ist.

5. Hydraulikschlauch (10) gemäß Anspruch 4, wobei das Polyalkylenimin ein verzweigtes Polyethylenimin mit der folgenden Formel ist:

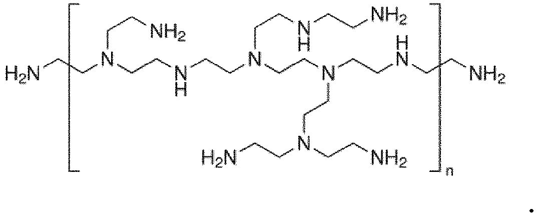

6. Hydraulikschlauch (10) gemäß Anspruch 4 oder 5, wobei das verzweigte Polyethylenimin eine Molmassenverteilung Mw zwischen 500 g/mol und 50000 g/mol aufweist.

7. Hydraulikschlauch (10) gemäß einem der vorstehenden Ansprüche, wobei das Elastomermaterial ein Acrylnitril-Butadien-Kautschuk ist.

8. Hydraulikschlauch (10) gemäß einem der vorstehenden Ansprüche, wobei das Elastomermaterial ein Acrylnitril-Butadien-Kautschuk mit der folgenden Formel ist:

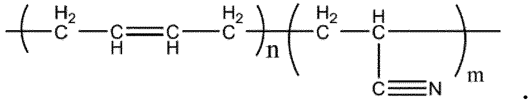

9. Hydraulikschlauch (10) gemäß einem der vorstehenden Ansprüche 1 bis 7, wobei das Elastomermaterial ein modifizierter Acrylnitril-Butadien-Kautschuk mit einer der folgenden Formeln ist: 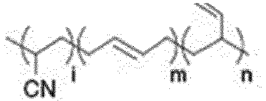 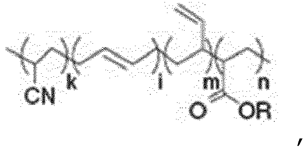 wobei R ein Metallion, H oder eine Alkylgruppe ist.

10. Hydraulikschlauch (10) gemäß einem der vorstehenden Ansprüche, ferner umfassend wenigstens eine Zwischenlage (3) und/oder eine Außenlage (4), die die innerste Schlauchlage (2) bedecken.

11. Hydraulikschlauch (10) gemäß Anspruch 10, wobei die wenigstens eine Zwischenlage (3) ein Metallgeflecht ist, das die innerste Schlauchlage (2) bedeckt, und die Außenlage (4) eine selbstdichtende Materialzusammensetzung umfasst, die ein Elastomermaterial und ein Polyalkylenimin umfasst, und die wenigstens eine Zwischenlage (3) bedeckt.

12. Verfahren zur Herstellung eines Hydraulikschlauchs (10) gemäß Ansprüchen 1 bis 11, umfassend die Schritte
A) Mischen eines Elastomermaterials und eines Polyalkylenimins,
B) Extrudieren des Gemischs von Schritt A),
C) Härten des extrudierten Gemischs von Schritt B), um eine innerste Schlauchlage (2) zu bilden, die wenigstens einen Kanal (1) umgibt und die ein Elastomermaterial und ein Polyalkylenimin umfasst, wobei das Elastomermaterial ein Butadien-Copolymer oder ein Polychloropren ist.

13. Verwendung einer selbstdichtenden Materialzusammensetzung, die ein Elastomermaterial und ein Polyalkylenimin umfasst, für eine innerste Schlauchlage (2) eines Hydraulikschlauchs (10), wobei das Elastomermaterial ein Butadien-Copolymer oder ein Polychloropren ist.

## Revendications

1. Tuyau hydraulique (10) comprenant un tube formant la couche la plus interne (2) entourant au moins un canal (1), dans lequel le tube formant la couche la plus interne (2) comprend une composition de matière auto-obturante comprenant un matériau élastomère et une polyalkylèneimine, et dans lequel le matériau élastomère est un copolymère de butadiène ou un polychloroprène.

2. Tuyau hydraulique (10) selon la revendication 1, dans lequel la polyalkylèneimine est choisie parmi la polyéthylèneimine, la polypropylèneimine, la polybutylèneimine et la polypentylèneimine.

3. Tuyau hydraulique (10) selon une des revendications précédentes, dans lequel la polyalkylèneimine est linéaire ou ramifiée.

4. Tuyau hydraulique (10) selon une des revendications précédentes, dans lequel la polyalkylèneimine est une polyéthylèneimine.

5. Tuyau hydraulique (10) selon la revendication 4, dans lequel la polyalkylèneimine est une polyéthylèneimine ramifiée de la formule suivante

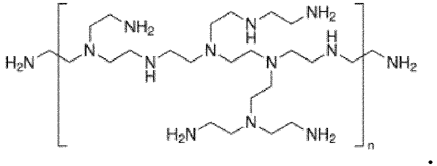

6. Tuyau hydraulique (10) selon la revendication 4 ou 5, dans lequel la polyéthylèneimine ramifiée a une distribution de masse molaire Mw entre 500 g/mol et 50 000 g/mol.

7. Tuyau hydraulique (10) selon une des revendications précédentes, dans lequel le matériau élastomère est un caoutchouc acrylonitrile-butadiène.

8. Tuyau hydraulique (10) selon une des revendications précédentes, dans lequel le matériau élastomère est un caoutchouc acrylonitrile-butadiène de la formule suivante

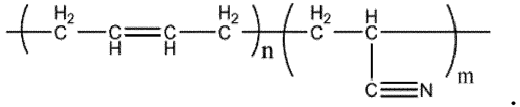

9. Tuyau hydraulique (10) selon une des revendications 1 à 7 précédentes, dans lequel le matériau élastomère est un caoutchouc acrylonitrile-butadiène modifié d'une des formules suivantes 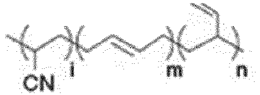 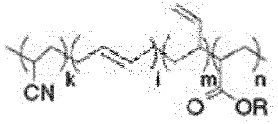 avec R étant un ion métallique, H ou un groupe alkyle.

10. Tuyau hydraulique (10) selon une des revendications précédentes, comprenant en outre au moins une couche intermédiaire (3) et/ou une couche externe (4) recouvrant le tube formant la couche la plus interne (2).

11. Tuyau hydraulique (10) selon la revendication 10, dans lequel l'au moins une couche intermédiaire (3) est un tressage métallique recouvrant le tube formant la couche la plus interne (2) et la couche externe (4) comprend une composition de matière auto-obturante comprenant un matériau élastomère et une polyalkylèneimine et recouvre l'au moins une couche intermédiaire (3).

12. Procédé de production d'un tuyau hydraulique (10) selon les revendications 1 à 11, comprenant les étapes de
A) mélange d'un matériau élastomère et d'une polyalkylèneimine,
B) extrusion du mélange de l'étape A),
C) durcissement du mélange extrudé de l'étape B) pour former un tube formant la couche la plus interne (2) entourant au moins un canal (1) et qui comprend un matériau élastomère et une polyalkylèneimine, le matériau élastomère étant un copolymère de butadiène ou un polychloroprène.

13. Utilisation d'une composition de matière auto-obturante comprenant un matériau élastomère et une polyalkylèneimine pour un tube formant la couche la plus interne (2) d'un tuyau hydraulique (10), le matériau élastomère étant un copolymère de butadiène ou un polychloroprène.
